# EUROPEAN PATENT SPECIFICATION

(11) **EP 1 825 906 B1**
(45) Date of publication and mention of the grant of the patent: **22.09.2010**
(21) Application number: 06075454.6
(22) Date of filing: 27.02.2006
(51) Int. Cl.: B01F 5/06, B29C 45/24, B29C 45/58, B29C 47/68, B29C 47/36

(54) **Mixing and filtering device for an extruder**
Misch- und Filtervorrichtung für einen Extruder
Dispositif de filtrage et de mélange pour une extrudeuse

(43) Date of publication of application: 29.08.2007
(73) Proprietor: Olderaan, Peter Frank, 7109 BN Winterswijk-Miste (NL)
(72) Inventor: Olderaan, Peter Frank, 7109 BN Winterswijk-Miste (NL)
(74) Representative: 't Jong, Bastiaan Jacob

(56) References cited:
- US-A- 3 989 434
- US-A- 4 434 053
- PATENT ABSTRACTS OF JAPAN vol. 015, no. 407 (M-1169), 17 October 1991 (1991-10-17) -& JP 03 169522 A (NISSEI PLASTICS IND CO), 23 July 1991 (1991-07-23)
- PATENT ABSTRACTS OF JAPAN vol. 2000, no. 17, 5 June 2001 (2001-06-05) -& JP 04 112023 A (AIMEKKUSU KK; BUTLER DESIGNS LTD), 14 April 1992 (1992-04-14)

## Description

The invention relates to a device for an extruder. In particular the device could be embodied as a mixing device or as a filter device.

Plastics can be processed into products by heating the plastic in an extruder and injecting the plasticized plastic into a mould in which the heated plastic is cooled down and forms a desired product.

The plastic is supplied to the extruder as a granulated material. If the granules are of the same composition, the extruder will produce a plasticized plastic of a homogenous quality. However, it is common practice to mix different kind of granulated material to arrive at a desired composition of the plastic or in order to recycle used plastic.

If granulated material of different composition is fed to an extruder, the resulting plasticized plastic is not of a homogenous quality. It is therefore necessary to provide a mixing device, which ensures a homogenous plasticized plastic resulting from a heterogeneous granulated material.

A known mixing device consists out of a body in which a plurality of small holes are provided. The heterogeneous plasticized plastic is pressed through the small holes and after the mixing device the plurality of streams of plasticized plastic coming from the small holes are joined to a main stream. Such a mixing device provides a more or less homogenous plasticized plastic stream.

A disadvantage of such a known mixing device is the pressure with which the plasticized plastic can be pressed through the mixing device. Due to the small holes the internal pressure in the plasticized plastic increases substantially, which could result in a degradation of the plastic.

In the art several mixing devices are proposed: JP 03169522 and US 3,989,434 describe a mixing device comprising grinded helical paths on the outside of a cylindrical body, wherein the helical paths form clockwise and counter clockwise channels and intersect at regular intervals. No intersections are disclosed where four helical channels meet and form helical channels depart.

WO 2004/098759 describes a static mixer having a multitude of through bores in a block material. Helical passage ways are suggested. It discloses a device in accordance with the preamble of claim 1.

When using recycled plastic granular material it is also necessary to have a filter in the extruder. The recycled granular material always consists of a small amount of alien particles such as metal particles. If these metal particles are injected into a mould, they could damage this mould and therefore a filter device should be used. A known filter device consists out of a plate provided with a plurality of small holes, which plate is placed in the stream of plasticized plastic. Again due to the small holes the internal pressure in the plasticized plastic is substantially increased, which could result in degradation of the plastic.

It is an object of the invention to provide a device for an extruder, which does not have the disadvantage of small holes by which the internal pressure is substantially increased and which device also provides for a good mixture of the plasticized plastic.

This object is achieved by the invention with a device, which comprises a body with a number of channels, wherein the channels consists out of clockwise directed helical channels and counterclockwise directed helical channels and wherein the channels intersect at regular intervals at an intersection, in the middle of the device four channels arrive at an intersection and four channels depart from such an intersection and the boundaries of the device only two channels intersect at an intersection.The plasticized plastic is fed through the helical channels. As one helical channel is in clockwise direction while the other is in a counterclockwise direction, two streams of plasticized plastic result, turning in opposite directions. By feeding the plastic through a helical channel, a first mixture is already achieved because the plastic stream will rotate in the channel as a result of the shape of the channel. By letting the two opposite rotating streams intersect a further mixture is achieved. At the intersection the two streams will collide causing a compression of the plastic material and the material expands back when the two streams leave the intersection. This kneading of the plastic results in a good mixture and provides a homogenous plasticized plastic stream.

Due to the use of channels, instead of small holes, the plastic streams are not subjected to high internal pressures. As a result, the overall pressure, in order to push the plastic stream through the device, is kept low while still a good mixture is provided.

A further advantage of the helical channels is the smooth passage for the plastic, while still a good mixture is provided. Sharp corners should be avoided as much as possible, as they will have an adverse effect on the properties of the plastic.

In a preferred embodiment the device comprises a pair of first helical channels and a pair of second helical channels, wherein both pairs of helical channels have a common center line and wherein both pairs of channels intersect at least at a common intersection. Now four streams are formed by the channels and these four streams will join at an intersection and will provide a further mixture of the plasticized material.

In yet another embodiment of the device according to the invention, the body comprises a plurality of holes extending from the outer service of the body into the channels. With such an embodiment a filtering device is provided, in which the plasticized material can gradually flow from the channel to the outside of the device through the plurality of holes. As the plasticized material is not directly forced through a number of holes, but as the possibility exists to exit the channel at a position somewhere along the length of the channel, the increased pressure is substantially decreased, while still a filtering function is provided for.

In another preferred embodiment, the body is a tubular body and the diameter of the helical shape of the channel is substantially equal to the diameter of the tubular body. With such an embodiment the plasticized plastic will flow through the wall of the tubular body, while leaving a central passage open, which could be used for other purposes.

Preferably the channels discharge at one end of the tubular body and are closed off at the other end, and the central passage of the body is closed off at the one end of the tubular body and discharges at the other end. With the helical channels, the plasticized plastic is mixed, while by providing the openings also a filtering function is provided. With the tubular body the filtered and mixed material can flow both the outside and to the central passage of the device. Downstream of the device the both streams originating from the central passage and from the outer surface are joined, which even provides a further mixture of the material.

In a further preferred embodiment of the device, the tubular body comprises a tubular inner body part and a tubular outer body part, which are coaxially arranged. This enables a simple disassembly of the device, such that the device can be cleaned. The channel extends through the section surface such that part of a channel is arranged in the outer body part while the other part of the channel is arranged in the inner body part.

These and other features of the invention will be elucidated in conjunction with the accompanying drawings.
Figure 1 shows a schematic view of an extruder device.
Figure 2 shows a perspective view of a filtering device according to the invention.
Figure 3 shows a perspective view of the channels arranged in the filtering device of figure 2.
Figure 4 shows a perspective, partially cross-sectional view of a second embodiment of a filtering device according to the invention.
Figure 5 shows a different perspective view of the embodiment according to figure 4.
Figures 6 and 7 show perspective views of a third embodiment according to the invention.

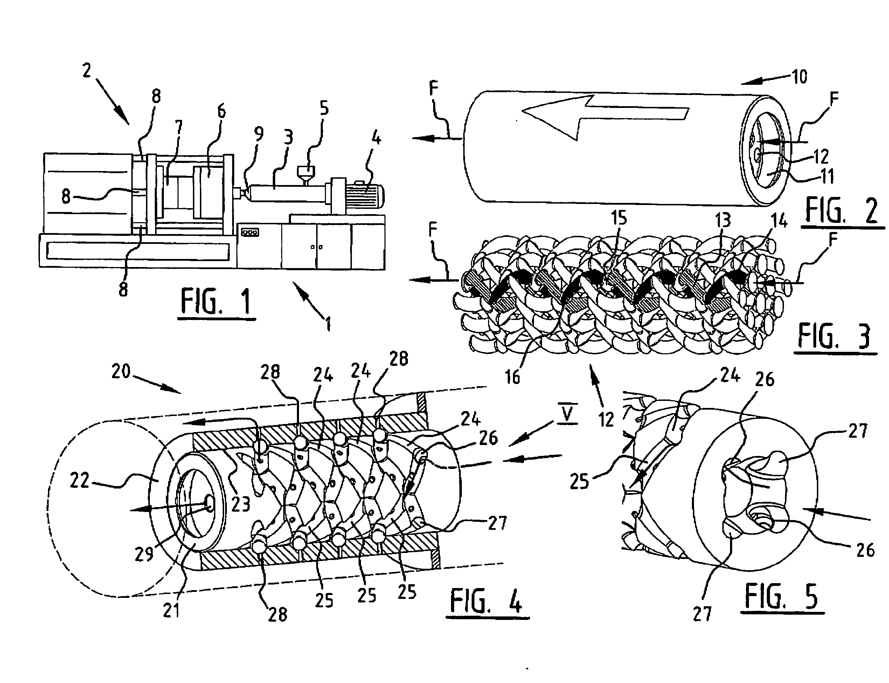

Figure 1 shows a schematic view of an extruder 1. This extruder 1 is coupled to a mould 2. Extruder 1 has a housing 3 in which a screw is arranged which is driven by a motor 4. The housing 3 is heated, such that granulate material, which is fed through the hopper 5, is plasticized. The screw in the housing 3 provides pressure, such that the plasticized plastic is injected into the mould 2. This mould 2 comprises a first mould half 6 and a second mould half 7 which can be pressed together by cylinders 8. The device according to the invention can be arranged at the exit 9 of the extruder 1.

Figure 2 shows a perspective view of a device 10 according to the invention. A flow F of plasticized material is transported through this device 10. At the entrance 11 of the device 10 a number of channels 12 are arranged. In figure 3 these channels 12 are shown in more detail.

The channels 12 consists out of clockwise directed helical channels 13 and counterclockwise directed channels 14. The channels 13 and 14 intersect at an intersection 15. At such an intersection 15 the streams in the channels 13, 14 collide with each other as a result of which the two streams are kneaded providing a good mixture of both streams. Also in this embodiment, the intersection 15 is embodied as an expansion chamber, in which the internal pressure in the plastic is temporarily relieved, improving the mixing and kneading action. In the middle of the device four channels arrive at an intersection 15 and four channels depart from such an intersection. At the boundaries of the device only two channels intersect at an intersection 16.

Plasticized plastic F flowing through the channels 13 and 14 encounter a plurality of intersections 15, 16 which provides again and again a mixing action. The flow of plastic resulting from the device 10 has a better homogeneity than prior art mixing devices.

In figure 4 a perspective, partially cross-sectional view of a filter device 20 is shown. This filter device comprises a tubular body with a tubular inner body part 21 and a tubular outer body part 22. At the sectional surface 23 helical channels 24, 25 are arranged. Plasticized plastic enters these channels 24, 25 through openings 26, 27. In the walls of the channels 24, 25 holes 28 are arranged through which the plasticized plastic can flow through the outside of the device 20 or to the inner central passage 29.

By the helical channels 24, 25 a mixing action is provided, while the holes 28 provide for a filtering action.

If debris is filtered out it will remain in the channels 24, 25. In order to clean these channels the tubular inner part 21 can be shifted out of the tubular outer part 22.

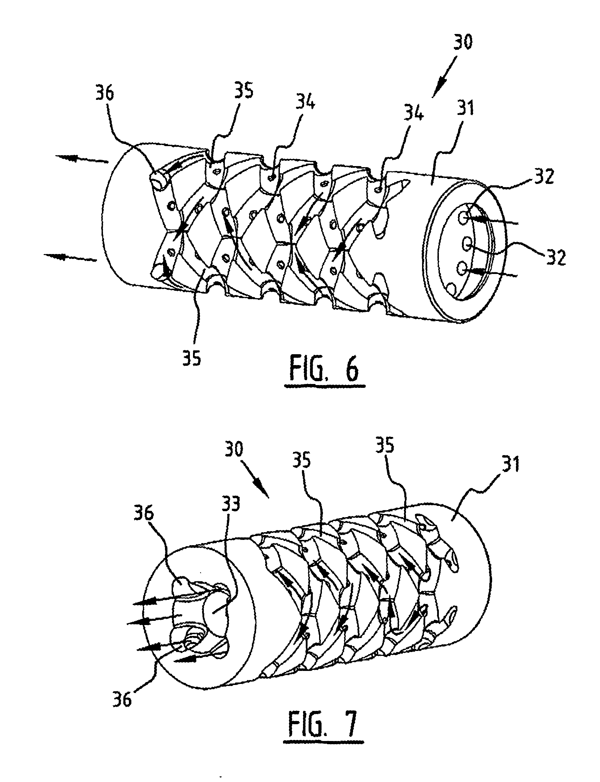

Figure 6 shows a third embodiment 30, which is in fact a combination of the embodiments shown in figures 1 through 5. This embodiment 30 has a body 31 in which helical channels 32 are arranged. The structure of these channels 32 is identical to the channels 13, 14 shown in figure 3. The body 31 has a central passage 33, which is shown in figure 7. The helical channels 32 are provided with holes, which extend from the channels 32 towards the outer surface of the body 31 or towards the central passage 33. These holes 34 enable a filtering action of the device 30. To ensure that all the plastic fed through the channels 32 is filtered, the channels 32 are blind, i.e. only the holes 34 provide an exit for the plastic fed through the channels 32.

The device 30 is inserted in the tube of an extruder and the outer surface of the body 31 is in direct contact with the tube of an extruder. Plastic coming through the holes 34 is then guided through the channels 35. These channels 35 are shown in figures 6 and 7 as open channels, but in combination with the extruder tube are shaped as closed channels. The filtered plastic running through the channel 35 flows to exit openings 36, where the plastic is joined with the plastic exiting the central passage 33.

## Claims

1. Device (10) for an extruder (1), which device (10) comprises a body with a number of channels (12,13,14),
wherein the channels (12,13,14) consists out of clockwise directed helical channels (13) and counterclockwise directed helical channels (14) and wherein the channels (13,14) intersect at regular intervals at an intersection (15),
**characterized in that**
in the middle of the device (10) four channels (13,14) arrive at an intersection (15) and four channels (13,14) depart from such an intersection and at the boundaries of the device only two channels (13,14) intersect at an intersection (16).

2. Device according to claim 1, wherein the number of channels (12, 13, 14) comprising a pair of first helical channels (13) and a pair of second helical channels (14), wherein both pairs of helical channels (13,14) have a common centerline and wherein both pairs of channels (13,14) intersect at least at a common intersection (15,16).

3. Device (10) according to claim 1 or 2, wherein the body comprises a plurality of holes (28) extending from the outer surface of the body into the channels (12,13,14).

4. Device (10) according to any of the preceding claims, wherein the body is a tubular body and wherein the diameter of the helical shape of the channels (12,13,14) is substantially equal to the diameter of the tubular body.

5. Device according to claim 3 and 4, wherein the channels (12,13,14) discharge at one end of the tubular body and are closed off at the other end, and wherein the central passage (33) of the body is closed off at the one end of the tubular body and discharges at the other end.

6. Device according to claim 5, wherein holes are arranged in the body, which holes (34) extend from the outer surface into the channels (12,13,14) and which holes (34) extend from the central passage (33) into the channels (12,13,14).

7. Device (10) according to any of the claims 4 - 6, wherein the tubular body comprises a tubular inner body part (21) and an tubular outer body part (22), which are coaxially arranged.

## Patentansprüche

1. Vorrichtung (10) für einen Extruder (1), wobei die Vorrichtung (10) einen Körper mit einer Anzahl von Kanälen (12, 13, 14) aufweist, wobei die Kanäle (12, 13, 14) aus im Uhrzeigersinn ausgerichteten schraubenlinienförmigen Kanälen (13) und aus gegen den Uhrzeigersinn ausgerichteten schraubenlinienförmigen Kanälen (14) bestehen und wobei die Kanäle (13, 14) einander in regelmäßigen Abständen an einem Schnittpunkt (15) überschneiden,
**dadurch gekennzeichnet, dass**
in der Mitte der Vorrichtung (10) vier Kanäle (13, 14) an einem Schnittpunkt (15) ankommen und vier Kanäle (13, 14) von einem derartigen Schnittpunkt abgehen, und dass sich an den Rändern der Vorrichtung lediglich zwei Kanäle (13, 14) an einem Schnittpunkt (16) überschneiden.

2. Vorrichtung gemäß Anspruch 1, wobei die Anzahl von Kanälen (12, 13, 14) ein Paar erster schraubenlinienförmiger Kanäle (13) und ein Paar zweiter schraubenlinienförmiger Kanäle (14) aufweist, wobei beide Paare schraubenlinienförmiger Kanäle (13, 14) eine gemeinsame Mittellinie aufweisen und wobei beide Paare von Kanälen (13, 14) einander an mindestens einem gemeinsamen Schnittpunkt (15, 16) überschneiden.

3. Vorrichtung (10) gemäß Anspruch 1 oder 2, wobei der Körper eine Mehrzahl von Löchern (28) aufweist, die sich von der Außenfläche des Körpers in die Kanäle (12, 13, 14) hineinerstrecken.

4. Vorrichtung (10) gemäß einem der vorhergehenden Ansprüche, wobei der Körper ein röhrenförmiger Körper ist und wobei der Durchmesser der Schraubenlinienform der Kanäle (12, 13, 14) im Wesentlichen gleich dem Durchmesser des röhrenförmigen Körpers ist.

5. Vorrichtung gemäß Anspruch 3 oder 4, wobei die Kanäle (12, 13, 14) an einem Ende des röhrenförmigen Körpers ausmünden und an dem anderen Ende verschlossen sind, und wobei der zentrale Durchgang (33) des Körpers an dem einen Ende des röhrenförmigen Körpers verschlossen ist und an dem anderen Ende ausmündet.

6. Vorrichtung gemäß Anspruch 5, wobei in dem Körper Löcher angeordnet sind, wobei die Löcher (34) sich von der Außenfläche in die Kanäle (12, 13, 14) hineinerstrecken und wobei sich die Löcher (34) von dem zentralen Durchgang (33) in die Kanäle (12, 13, 14) hineinerstrecken.

7. Vorrichtung (10) gemäß einem der Ansprüche 4 bis 6, wobei der röhrenförmige Körper einen röhrenförmigen inneren Körperteil (21) und einen röhrenförmigen äußeren Körperteil (22) aufweist, die koaxial angeordnet sind.

## Revendications

1. Dispositif (10) pour une extrudeuse (1), lequel dispositif (10) comprend un corps avec un certain nombre de canaux (12, 13, 14), dans lequel les canaux (12, 13, 14) consistent en des canaux hélicoïdaux dirigés dans le sens des aiguilles d'une montre (13) et de canaux hélicoïdaux dirigés dans le sens inverse des aiguilles d'une montre (14), et dans lequel les canaux (13, 14) se croisent à intervalles réguliers au niveau d'une intersection (15),
**caractérisé en ce** qui :
au milieu du dispositif (10), quatre canaux (13, 14) arrivent au niveau d'une intersection (15) et quatre canaux (13, 14) partent d'une telle intersection et au niveau des limites du dispositif, seuls deux canaux (13, 14) se croisent au niveau d'une intersection (16).

2. Dispositif selon la revendication 1, dans lequel le nombre de canaux (12, 13, 14) comprend une paire de premiers canaux hélicoïdaux (13) et une paire de seconds canaux hélicoïdaux (14), dans lequel les deux paires de canaux hélicoïdaux (13, 14) ont un axe central commun et dans lequel les deux paires de canaux (13, 14) se croisent au moins au niveau d'une intersection commune (15, 16).

3. Dispositif (10) selon la revendication 1 ou 2, dans lequel le corps comprend une pluralité de trous (28) s'étendant à partir de la surface externe du corps dans les canaux (12, 13, 14).

4. Dispositif (10) selon l'une quelconque des revendications précédentes, dans lequel le corps est un corps tubulaire et dans lequel le diamètre de la forme hélicoïdale des canaux (12, 13, 14) est sensiblement égal au diamètre du corps tubulaire.

5. Dispositif selon les revendications 3 et 4, dans lequel les canaux (12, 13, 14) déchargent au niveau d'une extrémité du corps tubulaire et sont fermés au niveau de l'autre extrémité, et dans lequel le passage central (33) du corps est fermé au niveau de la une extrémité du corps tubulaire et décharge au niveau de l'autre extrémité.

6. Dispositif selon la revendication 5, dans lequel des trous sont agencés dans le corps, lesquels trous (34) s'étendent à partir de la surface externe jusque dans les canaux (12, 13, 14) et lesquels trous (34) s'étendent à partir du passage central (33) jusque dans les canaux (12, 13, 14).

7. Dispositif (10) selon l'une quelconque des revendications 4 à 6, dans lequel le corps tubulaire comprend une partie de corps interne tubulaire (21) et une partie de corps externe tubulaire (22), qui sont agencées de manière coaxiale.
